# EUROPÄISCHE PATENTANMELDUNG

(11) **EP 0 629 775 A1**
(43) Veröffentlichungstag der Anmeldung: **21.12.1994**
(21) Anmeldenummer: 94107105.2
(22) Anmeldetag: 06.05.1994
(51) Int. Cl.: F02D 41/14

(54) **Verfahren und Vorrichtung zur Regelung der Laufruhe einer Brennkraftmaschine**

(30) Priorität: 14.06.1993 DE 4319677
(71) Anmelder: ROBERT BOSCH GMBH, 70442 Stuttgart (DE)
(72) Erfinder: Dangl, Norbert, Dipl.-Ing., A-1040 Wien (AT); Schmidt, Eric, Dipl.-Ing., A-2143 Grosskrut (AT)

(57) **Zusammenfassung**

Es wird ein Verfahren und eine Vorrichtung zur Regelung der Laufruhe einer Brennkraftmaschine beschrieben. Jeweils zwei Segmentimpulse definieren ein Segment. Jedem Zylinder der Brennkraftmaschine ist ein Laufruhe-Istwert, ein Laufruhe-Sollwert, eine Regelabweichung und ein Regler zugeordnet, der ausgehend von der zugeordneten Regelabweichung einen zylinderspezifischen Stellwert vorgibt. Die Laufruhe-Istwerte und die Laufruhe-Sollwerte werden ausgehend von wenigstens einer Segment-Periodendauer vorgegeben. Die Laufruhe-Istwerte und/oder die den Reglern zugeführte Regelabweichungen werden einer gewichteten Mittelwertbildung unterzogen.

## Beschreibung

### Stand der Technik

Die Erfindung betrifft ein Verfahren und eine Vorrichtung zur Regelung der Laufruhe einer Brennkraftmaschine gemäß den Oberbegriffen der unabhängigen Ansprüche.

Ein solches Verfahren und eine solche Vorrichtung zur Regelung der Laufruhe einer Brennkraftmaschine ist aus der DE-OS 33 36 028 (US-A 4 688 535) bekannt. Dort wird ein Verfahren und eine Vorrichtung zur Regelung der Laufruhe einer Brennkraftmaschine beschrieben. Bei der dortigen Vorrichtung ist jedem Zylinder der Brennkraftmaschine eine Regelung zugeordnet, die abhängig von einer ihr zugeordneten Regelabweichung eine Stellgröße für den ihr zugeordneten Zylinder bildet. Die Regelabweichung ergibt sich aus den, den einzelnen Zylindern zugeordneten, Istwerten und Sollwerten. Als Istwert dienen die Zeitabstände zwischen zwei Verbrennungen bzw. die Dauer eines Segmentes, das durch ein Segmentrad definiert ist.

Die Sollwerte ergeben sich durch eine Mittelwertbildung über alle Istwerte. Mit einer solchen Laufruheregelung können nicht in allen Betriebszuständen befriedigende Ergebnisse erzielt werden.

### Aufgabe der Erfindung

Der Erfindung liegt die Aufgabe zugrunde, bei einem Verfahren und einer Vorrichtung zur Regelung der Laufruhe der eingangs genannten Art die Zylindergleichstellung noch weiter zu verbessern. Diese Aufgabe wird durch die in den unabhängigen Ansprüchen gekennzeichneten Merkmale gelöst.

### Vorteile der Erfindung

Mittels des erfindungsgemäßen Verfahrens und der erfindungsgemäßen Vorrichtung kann eine wesentlich bessere Zylindergleichstellung erzielt werden. Vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsformen erläutert. Es zeigen Figur 1 ein Blockdiagramm der erfindungsgemäßen Vorrichtung, Figur 2 die zeitliche Abfolge verschiedener Signale und Figur 3 ein Blockdiagramm einer weiteren Ausgestaltung.

### Beschreibung der Ausführungsbeispiele

Im folgenden wird die erfindungsgemäße Vorrichtung am Beispiel einer selbstzündenden Brennkraftmaschine beschrieben. Die Erfindung ist aber nicht auf selbstzündende Brennkraftmaschinen beschränkt. Sie kann auch bei anderen Typen von Brennkraftmaschinen eingesetzt werden. In diesem Fall sind entsprechende Bauteile auszutauschen. So tritt z.B. bei einer fremdgezündeten Brennkraftmaschine die Drosselklappe an die Stelle der Regelstange.

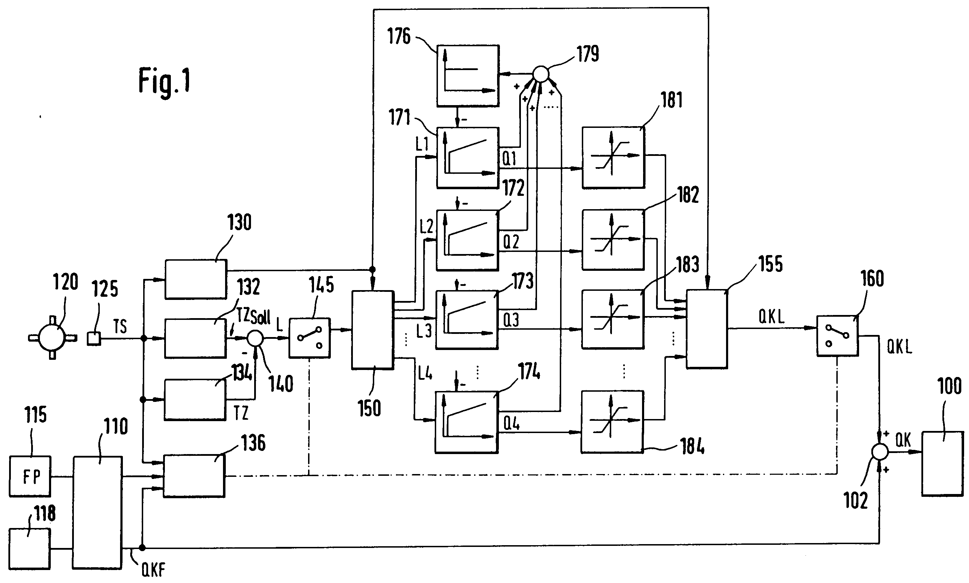

In Figur 1 ist mit 100 ein leistungsbestimmendes Stellwerk bezeichnet, an dessen Eingang das Ausgangssignal QK eines Additionspunktes 102 anliegt. An dem einen Eingang des Additionspunktes 102 liegt das Ausgangssignal QKF einer Mengenvorgabe 110 und an dem anderen das Ausgangssignal QKL eines zweiten Schalters 160. Diese Mengenvorgabe verarbeitet das Ausgangssignal eines Fahrpedalstellungsgebers 115 sowie gegebenenfalls die Ausgangssignale von weiteren Sensoren 118. Die Mengenvorgabe 110 beaufschlagt ferner eine Steuerung 136 mit dem Mengensignal QKF sowie mit weiteren nicht näher bezeichneten Größen.

Das Stellwerk 100 bestimmt die Leistungsabgabe einer nicht dargestellten Brennkraftmaschine. Bei Dieselbrennkraftmaschinen wird üblicherweise eine Regelstange bzw. ein Verstellhebel als leistungsbestimmendes Stellwerk eingestzt. Bei fremdgezündeten Brennkraftmaschinen dient vorzugsweise die Drosselklappe als leistungsbestimmendes Stellglied. Es ist aber auch möglich, daß andere Größen, wie zum Beispiel der Zündzeitpunkt oder die Zeitdauer der Kraftstoffeinspritzung entsprechend beeinflußt werden.

Vorzugsweise ist an der Kurbelwelle bzw. an der Nockenwelle der Brennkraftmaschine ein Segmentrad 120 angeordnet, das wenigstens eine der Zylinderzahl entsprechende Anzahl von Markierungen aufweist. Dieses Segmentrad wird von einem Sensor 125 abgetastet, der ein Signal TS abgibt, das aus einer Abfolge von Segmentimpulsen besteht. Dieses Signal wird der Steuerung 136, einer Synchronisation 130, einer Sollwertberechnung 132 sowie einer Istwertberechnung 134 zugeführt.

Das Ausgangssignal TZₛₒₗₗ der Sollwertberechnung 132 und das Ausgangssignal TZ_{I} der Istwertberechnung 134 werden im Additionspunkt 140 verknüpft. Das Ausgangssignal L des Additionspunktes 140 gelangt zu einem ersten Schaltmittel 145. Bei geschlossenem Schalter 145 gelangt das Signal zu einer Synchronisationseinrichtung 150. Diese Synchronisationseinrichtung leitet das Ausgangssignal des Additionspunktes 140, den einzelnen Zylindern zugeordneten, Reglern 171, 172, 173 und 174 zu.

Die Regler 171 bis 174 beaufschlagen ihnen zugeordnete Begrenzer 181, 182, 183 und 184 mit einem, dem entsprechenden Zylinder zugeordneten Mengensignal Q1, Q2, Q3 und Q4. Desweiteren werden die Ausgangssignale der Regler in einem Additionspunkt 175 verknüpft und einem Verstärker 176 zugeleitet. Der Verstärker 176 beaufschlagt die einzelnen Regler mit einem entsprechenden Signal.

Eine zweite Synchronisationseinrichtung 155 bildet ausgehend von den einzelnen Mengensignalen Q1, Q2, Q3, Q4 eine Laufruhekorrekturmenge QKL. Diese gelangt über den zweiten Schalter 160 zu dem Additionspunkt 102. Dort wird sie mit dem Ausgangssignal der Mengenvorgabe 110 verknüpft.

Die Steuerung 136 beaufschlagt den ersten Schalter 145 und den zweiten Schalter 160 mit den entsprechenden Ansteuersignalen. Die Synchronisation 130 beaufschlagt die erste Synchronisationseinheit 150 und die zweite Synchronisationseinheit 155 mit entsprechenden Ansteuersignalen.

Bei dem dargestellten Ausführungsbeispiel handelt es sich um eine Sechszylinderbrennkraftmaschine. Die erfindungsgemäße Vorgehensweise kann aber ohne weiteres bei Brennkraftmaschinen mit einer anderen Zylinderzahl eingesetzt werden. In diesem Fall muß die Zahl der Segmente auf dem Segmentrad sowie die Anzahl der Regler und Begrenzer entsprechend angepaßt werden.

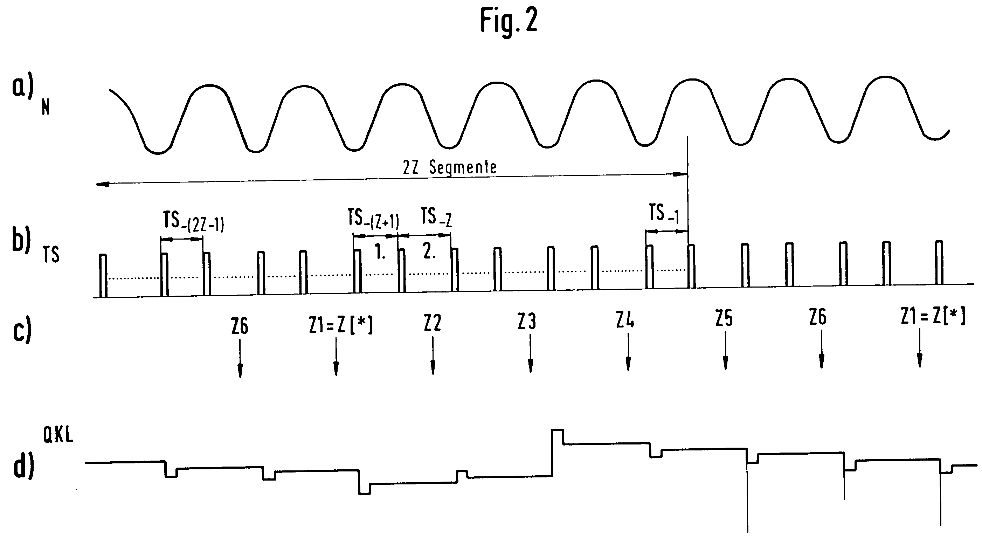

Die Funktionsweise dieser Einrichtung soll nun anhand der Figur 2 erläutert werden. In Figur 2a ist die momentane Drehzahl N der Brennkraftmaschine über der Zeit aufgetragen. Nach jeder Verbrennung steigt die Drehzahl auf ihr Maximum an und fällt dann auf ein Minimum ab. Bei der nächsten Zumessung wiederholt sich dieser Vorgang. Dies führt dazu, daß die Drehzahl um einen bestimmten Mittelwert schwankt.

In Figur 2b ist das Ausgangssignal TS des Sensors 125, das aus einer Abfolge von Segmentimpulsen besteht, aufgetragen. Jeweils zwei Segmentimpulse definieren ein Segment. Ferner sind die Bezeichnungen der einzelnen Segmente eingezeichnet. Das Segment, das auf die Zumessung in den ersten Zylinder Z1 erfolgt, ist mit 1. bezeichnet und besitzt die Segment-Periodendauer TS_{-(Z+1)} . Das darauffolgende Segment ist mit 2. bezeichnet und besitzt die Segment-Periodendauer TS_{-Z}. Die Segment-Periodendauer entspricht dem zeitlichen Abstand zweier aufeinanderfolgender Segmentimpulse.

In Figur 2c sind die Zeitpunkte mit Pfeilen markiert, bei denen die Zumessung in die mit ZI bezeichneten Zylinder erfolgt. In der nachfolgenden Beschreibung wird die Bestimmung des Istwerts und des Sollwerts am Beispiel des ersten Zylinders Z1 erläutert. Dieser Zylinder ist mit * gekennzeichnet. Bei jedem Motorzyklus erfolgt in jeden Zylinder jeweils eine Zumessung. Jeder Motorzyklus wird in 2Z-Segemente aufgeteilt. Die Zahl Z entspricht der Zylinderzahl der Brennkraftmaschine.

Die Segment-Periodendauern unmittelbar aufeinander folgender Segmente schwanken sehr stark. Die 2Z Segment-Periodendauern eines jeden Motorzykluses lassen sich jedoch auf die Z-Zylinder aufteilen, sodaß jedem Zylinder eine zylinderspezifische Periodendauer TZ zugeordnet werden kann. Im einfachsten Fall ist TZ gleich der Summe aus der ersten und zweiten Segment-Periodendauer nach der Zumessung in den betrachteten Zylinder. Die Schwankungen dieser zylinderspezifischen Periodendauern TZ werden als Laufunruhe bezeichnet. Das Ziel der Erfindung ist es, diese Schwankungen auszugleichen, damit sich nahezu eine konstante Periodendauer TZ für alle Zylinder ergibt.

In Figur 2d ist die zylinderspezifische Stellgröße QKL zur Kompensierung der Laufunruhe aufgetragen. Um eine schnellere Einstellung des Stellwerks 100 zu erreichen wird die Stellgröße in einem ersten kurzen Zeitabschnitt überhöht.

Bisher wurden zur Bildung des Istwertes für die einzelnen Zylinder jeweils die zwei auf die Einspritzung eines entsprechenden Zylinder folgenden Segmente ausgewertet. Dies bedeutet hier, daß der Istwert für den ersten Zylinder Z1 ausgehend von den Segment-Periodendauern TS_{-(Z+1)} und TS_{-Z} berechnet wird. Der Sollwert ergibt sich dann aus diesen beiden sowie den fünf vorhergehenden und den fünf nachfolgenden Segmenten. Dies entspricht dem Mittelwert über einen vollen Motorzyklus.

Ausgehend von den Signalen TS des Drehzahlsensors 125 berechnet die Istwertberechnung 134, die den einzelnen Zylindern zugeordneten, Istwerte für die zugeordneten Laufruheregler. Im folgenden wird am Beispiel des Zylinders Z1 die Bestimmung des Laufruheistwerts für einen bestimmten Zylinder erläutert. Die Berechnung der Istwerte für die übrigen Zylinder erfolgt entsprechend.

Die während eines Arbeitstaktes eines betrachteten Zylinders ablaufenden physikalischen Vorgänge sind über mehrere Segmente hinweg wirksam. Daher ist es vorteilhaft, wenn eine zylinderspezifische Periodendauer TZ definiert, welche sich aus den (2S + 1) wirksamen Segment-Periodendauern errechnen läßt. Diese Berechnung der Peridendauer TZ erfolgt beispielsweise gemäß der Formel: 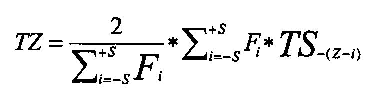
Diese zylinderspezifische Periodendauer entspricht, bei geeigneter Wahl der Wichtungsfaktoren Fᵢ, der Laufzeit des Verbrennungsvorgangs des zugeordneten Zylinders. Diese Periodendauer wird daher als Istwert TZ_{I} für den dem Zylinder zugeordneten Laufruheregler verwendet. Der zugehörige Sollwert TZₛₒₗₗ wird aus der Summe der aktuellen 2Z Segment-Periodendauern gebildet. Hierbei gilt die Formel: 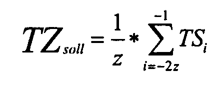
Ziel der Laufruheregler ist es die zylinderspezifische Periodendauer TZ über alle Zylinder hinweg konstant auf dem Wert TZₛₒₗₗ einzuregeln. Dies erfolgt durch die zylinderspezifische Korrektur QKL der einzuspritzenden Kraftstoffmenge QK.

Besonders vorteilhaft ist es, wenn die Segment-Periodendauern zur Bestimmung der Soll-und Istwerte ausgewertet werden. Diese Vorgehensweise bietet den Vorteil, daß mit den direkten Meßgrößen (Segment-Periodendauern) gearbeitet wird. Die Segment-Periodendauern stellen ein gutes Maß für Störungen der Laufruhe dar.

Neben der Segment-Periodendauer kann auch eine Größe, die ein Maß für die Abstand zwischen zwei Segmentimpulse darstellt, ausgewertet werden. So kann beispielsweise das Drehzahlsignal, insbesondere die Segmentdrehzahl, oder ein Beschleunigungssignal verwendet werden. So ist es beispielsweise möglich die Änderung der Segmentdrehzahl oder der Segment-Periodendauer auszuwerten. Als Segementdrehzahl wird die über ein Segment gemittelte Drehzahl bezeichnet.

Da die zeitliche Überlappung der Arbeitstakte der einzelnen Zylinder, insbesondere bei Zylinderzahlen größer 4, zu einer Mischinformation innerhalb der einzelnen gemessenen Segment-Periodendauern führt, ist es wünschenswert, die zylinderspezifischen Beiträge zu den Segment-Periodendauern zu entflechten.

Hierzu werden die Wichtungfaktoren Fᵢ so gewählt, daß die Berechnung des Laufruheistwerts einen nur für den betrachteten Zylinder gültigen Wert ergibt, und daß die Wirkung des vorangehenden bzw. des nachfolgenden Zylinders näherungsweise eliminiert wird. Hierbei können auch negative Wichtungsfaktoren sinnvoll sein.

Es kann eine beliebige Anzahl von Segmenten ausgewertet werden, besonders vorteilhaft ist die Auswertung von bis zu ca. 7 Segmenten. Von der Einspritzung in den betrachteten Zylinder weiter entfernt liegende Segment-Periodendauern üben nur einen geringen Einfluß aus. Bei höheren Segmentzahlen wird der Aufwand bei der Berechnung und der Applikation sehr groß.

Erfindungsgemäß werden zur Bestimmung der den einzelnen Zylindern zugeordneten Istwerte die Segment-Periodendauern unterschiedlich gewichtet. Hieraus ergibt sich der Vorteil, daß der physikalische Prozeß im Verbrennungsmotor besser berücksichtigt werden kann. Desweiteren kann die Laufruheregelung durch geeignte Wahl der Parameter (Gewichtungsfaktoren) an den Verbrennungsvorgang besser angepaßt werden. Diese Parameter können sowohl durch rechnerische Modellbildung als auch durch praktische Tests insbesondere im Rahmen der Applikation an die jeweiligen Eigenheiten (Zylinderzahl, Trägheitsmoment, Lage der Markierungen auf dem Segmentrad) des zu regelnden Motors angepaßt werden.

Der Additionspunkt 140 bestimmt ausgehend von dem Sollwert TZₛₒₗₗ und dem Istwert TZᵢₛₜ die Regelabweichung L. Bei bestimmten Betriebsbedingungen des Motors bzw. des Fahrzeugs betätigt die Steuerung 136 abhängig von verschiedenen Eingangssignalen die Schalter 145 und 160. Dadurch wird die Laufruheregelung in diesen bestimmten Betriebsbedingungen aktiv.

In diesem Fall gelangt die Regelabweichung über die Synchronisationseinrichtung 150 zu den verschiedenen Reglern 171, 172, 173 und 174. Hierbei ist jedem Zylinder ein Regler zugeordnet. Die Synchronisationseinrichtung wählt den entsprechenden Regler aus und leitet die entsprechende Regelabweichung L1, L2, L3 bzw. L4 dem entsprechenden Regler zu. Die den einzelnen Zylindern zugeordneten Laufruheregler sind vorzugsweise als Regler mit PI-Verhalten realisiert.

Das entsprechende Ausgangssignal der Regler wird in den jweiligen Begrenzern 181, 182, 183 bzw. 184 auf untere und obere Grenzwerte begrenzt. Die Synchronisationseinrichtung 155 wählt dann jeweils das entsprechende Reglerausgangssignal aus und leitet dieses über den zweiten Schalter 160 dem Additionspunkt 102 zu. Im Additionspunkt 102 wird das Ausgangssignal der Laufruheregler dem vom Fahrerwunsch abhängigen Mengensignal QKF überlagert. Das Stellwerk 100 wird dann mit der entsprechenden Stellgröße zur Einspritzung der entsprechenden Kraftstoffmenge beaufschlagt.

Beim Start sind die Integratoren der Laufruheregler auf Null gesetzt. Die Laufruheregler sind nur in einem bestimmten Drehzahlbereich aktiv. Es kann z.B. vorgesehen sein, daß bei einer Drehzahl größer als 1500 U/min die Schalter 145 bzw. 160 geöffnet werden und damit die Laufruheregelung außer Betrieb gesetzt wird.

Desweiteren kann vorgesehen sein, daß bei bestimmten Betriebsbedingungen insbesondere bei höherer Last lediglich eine Steuerung erfolgt. Dies bedeutet, es erfolgt kein Vergleich zwischen Soll- und Istwerten, dies wird durch Öffnen des Schalters 145 erreicht, die Ausgangssignale der Laufruheregler bleiben aber erhalten, dies bedeutet, der Schalter 160 ist geschlossen, und die entsprechenden Korrekturwerte QKL stehen weiter zur Verfügung. Eine solche Steuerung erfolgt vorzugsweise bei hoher Last.

Die Laufruheregelung ist vorzugsweise im Leerlaufbetrieb bzw. bei kleinen Drehzahlen aktiv.

Da der zeitliche Mittelwert der Leerlaufdrehzahl durch die Laufruheregelung nicht verändert werden darf, ist vorgesehen, daß die Ausgangssignale der Laufruheregler 171, 172, 173 und 174 im Additionspunkt 175 addiert und dem Verstärker 176 zugeführt werden. Dieser Verstärker 176 erzeugt ein Korrektursignal, das so ausgestaltet ist, daß die Abweichung vom zeitlichen Mittelwert gleich Null ist. Dies bedeutet, die Summe der Ausgangssignale Q1, Q2, Q3 und Q4 wird so gewählt, daß sich in ihrer Summe Null ergibt.

Bei defektem Drehzahlgeber werden die Laufruhestellgrößen der einzelnen Laufruheregler auf Null gesetzt. Dies bedeutet, das Laufruheprogramm wird nicht bearbeitet dies kann durch Öffnen der Schalter 160 und 145 verdeutlicht werden.

Im Schubbetrieb sind die negativen Laufruhestellgrößen wirkungslos. Die positiven Stellgrößen können somit eine Restmenge ergeben. Deshalb werden im Schubbetrieb die Korrekturmengen QKL auf Null reduziert bzw. der Schalter 160 wird geöffnet.

Durch Öffnen des Schalters 145 wird erreicht, daß den Reglern keine Regelabweichung L zugeführt wird. Dies bewirkt, die Ausgangsgrößen Q1, Q2, Q3 und Q4 bleiben auf einem konstanten Wert. Die entsprechenden Korrekturstellgrößen QKL bleiben in diesem Fall weiterhin aktiv und dienen zur Korrektur der Kraftstoffmenge.

Ist lediglich der Schalter 160 geöffnet und der Schalter 145 geschlossen, so werden die Korrekturstellgrößen laufend neu berechnet, sie haben aber keinen Druchgriff auf die eingespritzte Kraftstoffmenge. Sind beide Schalter geöffnet, so ist die Laufruheregelung inaktiv.

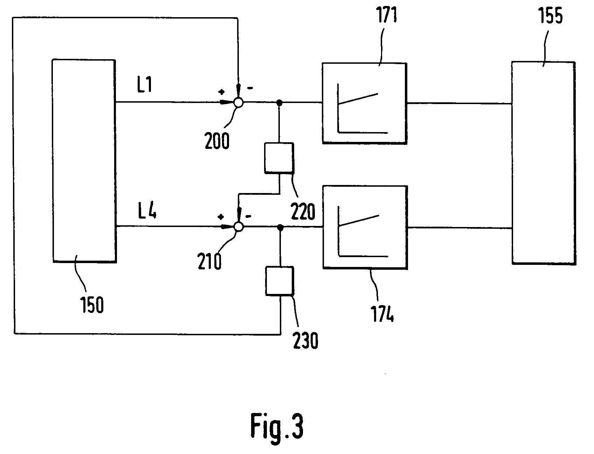

Eine besonders vorteilhafte Ausgestaltung ergibt sich, wenn zusätzlich bzw. anstelle der Wichtung der Istwerte die Regelabweichungen gewichtet werden. Hierzu sei auf Figur 3 verwiesen. Entsprechende Bauteile sind wie in Figur 1 mit entsprechenden Bezugszeichen markiert.

Zur Vereinfachung sind hier die Begrenzungen sowie der Additionspunkt 175 und der Verstärker 176 weggelassen. Desweiteren sind die Regler für den zweiten und dritten Zylinder ebenfalls weggelassen. Dieses Beispiel zeigt also lediglich eine Zweizylinderbrennkraftmaschine, kann aber auch ohne weiteres auf eine Brennkraftmaschine mit mehreren Zylindern ausgedehnt werden.

Die von der Synchronisationseinrichtung 150 bereitgestellte Regelabweichunge L1, die dem ersten Regler und damit dem ersten Zylinder zugeordnet ist, gelangt über einen Additionspunkt 200 zu dem ersten Laufruheregler 171. Das Ausgangssignal des Laufruheregler 171 gelangt dann zur zweiten Synchronisationseinrichtung 155.

Die Regelabweichung L4 für den vierten Zylinder gelangt ebenfalls über einen Additionspunkt 210 zu dem zugeordneten Regler 174. Dieser Regler beaufschlagt dann wieder entsprechend wie in Figur 1 die Synchronisationseinrichtung 155 mit einem Signal. Das Eingangssignal des Reglers 171 wird über eine Wichtung 220 zum Additionspunkt 210 und das Eingangssignal des Reglers 174 wird über eine Wichtung 230 zum Additionspunkt 200 geleitet.

Dies bedeutet, daß der Regelabweichung des einen Zylinders jeweils noch ein gewichteter Anteil der Regelabweichung des benachbarten Zylinders überlagert wird. Dieses überlagerte Signal gelangt dann wieder zum nächsten Zylinder und überlagert das dortige Eingangssignal ebenfalls. Vorzugsweise ist vorgesehen, daß die Wichtung mittels eines Faktors, der kleiner als 1 ist, erfolgt. Vorzugsweise wird der Wichtungsfaktor zu 0,5 gewählt.

Dies bedeutet, daß einem bestimmten Regler der gewichtete Mittelwert über wenigstens zwei Regelabweichungen zugeführt wird. Der Regler verarbeitet als Eingangsgröße einen gewichteten Mittelwert über mehrere Regelabweichungen. Hierbei wird die Regelabweichung die dem entsprechenden Zylinder zugeordnet ist wie der Regler stärker gewichtet als die übrigen Regelabweichungen. Betrachtet man beispielsweise den ersten Zylinder, so ist die dem ersten Zylinder zugeordnete Regelabweichung stärker zu wichten, als die den übrigen Zylindern zuzuordnende Regelabweichungen.

Diese Verknüpfung und Wichtung der Regelabweichungen der einzelnen Zylinder bewirkt, daß alle jene Integratoren der PI-Regler nicht so stark auf eine sprungförmige Anderung der Regelabweichung reagieren, wie jener Integrator, den es in erster Linie angeht. Diese Struktur wirkt entkoppelnd und erzeugt dadurch ein besseres Übergangsverhalten.

Die beschriebene Einrichtung kann sowohl analog als auch digital realisiert sein. Besonders vorteilhaft ist eine Realisierung der Einrichtung mittels eines entsprechend programmierten Rechners.

## Patentansprüche

1. Verfahren zur Regelung der Laufruhe einer Brennkraftmaschine, bei dem ein Segmentrad Segmentimpulse bereitstellt, wobei zwei Segmentimpulse ein Segment definieren, und jedem Zylinder der Brennkraftmaschine ein Laufruhe-Istwert, ein Laufruhe-Sollwert, eine Regelabweichung und ein Regler zugeordnet ist, wobei jeder Regler ausgehend von der zugeordneten Regelabweichung einen zylinderspezifischen Stellwert vorgibt, und die Laufruhe-Istwerte und die Laufruhe-Sollwerte ausgehend von wenigstens einer Größe (TZ), insbesondere der Segment-Periodendauer, vorgebbar ist, die ein Maß für die Abstand zwischen zwei Segmentimpulse darstellt, dadurch gekennzeichnet, daß die Laufruhe-Istwerte und/oder die den Reglern zugeführte Regelabweichungen mittels einer gewichteten Mittelwertbildung vorgebbar sind.

2. Verfahren nach Anspruch 1, dadurch gekennzeichnet, daß der Laufruhe-Istwert eines bestimmten Zylinders ausgehend von einer gewichteten Mittelwertbildung über wenigstens zwei Werten der Größe gebbar ist.

3. Verfahren nach einem der vorherigen Ansprüche, dadurch gekennzeichnet, daß zur Bestimmung des Istwerts für einen bestimmten Zylinder, wenigstens zwei Werte der Größe ausgewertet werden, die zeitlich nach der Zumessung in den bestimmten Zylinder liegen.

4. Verfahren nach einem der vorherigen Ansprüche, dadurch gekennzeichnet, daß die gewichtete Mittelwertbildung unter verwendung von Wichtungsfaktoren erfolgt, die so gewählt werden, daß bei der Bestimmung des Istwerts für einen bestimmten Zylinder der Einfluß der übrigen Zylinder eliminiert wird.

5. Verfahren nach einem der vorherigen Ansprüche, dadurch gekennzeichnet, daß den Reglern der gewichtete Mittelwert über wenigstens zwei Regelabweichungen zuführbar ist.

6. Verfahren nach einem Anspruch 5, dadurch gekennzeichnet, daß die Regelabweichung die dem gleichen Zylinder zugeordnet ist wie dem Regler stärker gewichtet wird als die übrigen Regelabweichungen.

7. Vorrichtung zur Regelung der Laufruhe einer Brennkraftmaschine, bei dem ein Segmentrad Segmentimpulse bereitstellt, wobei zwei Segmentimpulse ein Segment definieren, und jedem Zylinder der Brennkraftmaschine ein Laufruhe-Istwert, ein Laufruhe-Sollwert, eine Regelabweichung und ein Regler zugeordnet ist, wobei jeder Regler ausgehend von der zugeordneten Regelabweichung einen zylinderspezifischen Stellwert vorgibt, mit Mitteln, die ausgehend von wenigstens einer Größe (TZ), insbesondere der Segment-Periodendauer, die ein Maß für die Abstand zwischen zwei Segmentimpulse darstellt, die Laufruhe-Istwerte und die Laufruhe-Sollwerte vorgeben, dadurch gekennzeichnet, daß Mittel vorgesehen sind, die die Laufruhe-Istwerte und/oder die den Reglern zugeführte Regelabweichungen mittels einer gewichteten Mittelwertbildung vorgeben.
